# EUROPEAN PATENT APPLICATION

(11) **EP 4 730 109 A1**
(43) Date of publication of application: **22.04.2026**
(21) Application number: 24315481.2
(22) Date of filing: 17.10.2024
(51) Int. Cl.: G06F 8/65

(54) **AUTOMATIC FIRMWARE UPDATE IN AN INDUSTRIAL SYSTEM**

(71) Applicant: Schneider Electric Industries SAS, 92500 Rueil-Malmaison (FR)
(72) Inventor: Gorisse, François, F-06250 Mougins (FR); Canepa, Lorenzo, F-06600 Antibes (FR); Orssaud, Stéphane, F-06480 La Colle-sur-Loup (FR)
(74) Representative: Schneider Electric

(57) **Abstract**

An apparatus (ORC) for updating firmware of communication devices (CD) managed by a control device (CT) in an industrial system, the apparatus being configured to:
store a table listing, at each entry of the table, at least an identifier (Idt) of a communication device (CD), an expected version (Ve) of firmware of the communication device (CD), a current version (Vet) of firmware of the communication device (CD),
retrieve (S1) an identifier (Idr) of the communication device (CD) and a current version (Vcr) of firmware of said communication device (CD),
scan (S2) incrementally the entries of the table,
if the retrieved identifier (Idr) of the communication device CD matches an identifier (Idt) of the communication device (CD) of the entry of the table and if the retrieved current version (Vcr) of firmware matches a current version (Vct) of firmware of said entry of the table, retrieve (S3) a firmware package associated with the expected version (Ve) of firmware corresponding to said current version (Vct) of firmware of the entry of the table.

## Description

### FIELD OF INVENTION

The present invention generally relates to industrial automation systems, and more particularly relates to a control device handling the update of communication device firmware.

### BACKGROUND

There may be many different firmware in an industrial system. Firmware can be implemented in a Programmable Logic Controller (PLC) but also in different modules, the power supply, or the backplane... Due to cybersecurity fixes for example, the demand to update firmware is becoming frequent while customers habits imply to never change a system in place. Also, when a module must be replaced, the firmware of the new module may not comply with the application's needs. Thus for the maintenance service, it may be not obvious to update the firmware, as it can be also a complex and risky procedure.

Several ways exist to download a firmware:
- Devices can check if a new firmware version exists on the cloud and download/install it automatically or is asking from a GUI to download/install;
- A PC system or a smartphone is connected to a device and propose to download/install if a newer firmware exists;
- A mass storage element containing a newer firmware is inserted in a device and do the download/install;
- An administrator on a dedicated machine connected to several devices orchestrates the download/install of devices.

In a modular device system, containing for example a set of interconnected devices performing together an automation function, a problem is to have a consistent set of firmware version. The provider of devices may provide newer firmware versions of devices during the t device product life cycle. The new set of firmware version is always compatible itself, but it could introduce compatibility break with older firmware versions.

Customers are validating their automation system in a set of fixed firmware version for each device. Even if the device provider sends him a newer firmware version, the customer or OEM may want to downgrade the device firmware version to the tested one.

When the customer knows that an issue has been solved by a new firmware of the device provider, the customer may want to upgrade all devices in a consistent way to the newer version.

For customer it is useful to have a unified or standardized mechanism to upgrade multi provider devices.

There is therefore a need for a control device for managing constraints and storing files to automate the firmware update. The update mechanism should be accessible from any device (directly or via a master) and the software update engineering tool.

### SUMMARY

This summary is provided to introduce concepts related to the present inventive subject matter. This summary is not intended to identify essential features of the claimed subject matter nor is it intended for use in determining or limiting the scope of the claimed subject matter.

In one implementation, there is provided an apparatus for updating firmware of communication devices managed by a control device in an industrial system, the apparatus comprising:
one or more network interfaces to communicate with a telecommunication network;
a processor coupled to the network interfaces and configured to execute one or more processes; and
a memory configured to store a process executable by the processor, the process when executed operable to:
   store a table listing, at each entry of the table, at least an identifier of a communication device, an expected version of firmware of the communication device, a current version of firmware of the communication device,
   retrieve an identifier of the communication device and a current version of firmware of said communication device,
   scan incrementally the entries of the table,
   if the retrieved identifier of the communication device matches an identifier of the communication device of the entry of the table and if the retrieved current version of firmware matches a current version of firmware of said entry of the table, retrieve a firmware package associated with the expected version of firmware corresponding to said current version of firmware of the entry of the table.

Advantageously, the update strategy can be defined when the system is designed and modified by evolutive maintenance. The update strategy allows user to automatically update the firmware of communication devices to a desired version, simplifying actions of the user on the system with less operation on any communication device to update. The update strategy offers flexibility to choose any version of firmware, like the last version of firmware or a specific version of firmware.

The update strategy ensures, by means of the update table, a compatibility between the updated firmware, and an efficient and secured way to update a set of communication devices with desired versions of firmware.

In an embodiment, the apparatus is set with a target version of firmware for one or several communication devices, and steps of retrieving an identifier, scanning and retrieving a firmware package are repeated until the expected version of firmware matches the target version of firmware.

In an embodiment, the identifier of the communication device comprises at least one of an address of the communication device and a type of the communication device.

In an embodiment, the apparatus is further configured to store, at each entry of the table, a current version of hardware of communication device, to retrieve a current version of hardware of communication device and to retrieve the firmware package associated with the expected version of firmware corresponding to said current version of firmware of the entry of the table if the retrieved current version of hardware of said communication device matches the current version of hardware of the entry of the table.

In an embodiment, the apparatus is further configured to update the firmware of the communication device with the retrieved firmware package.

In an embodiment, the order of the entries of the table defines an update strategy allowing to automatically reach a targeted version of firmware for a communication device.

In an embodiment, the apparatus checks if the retrieved identifier of the communication device matches an identifier of the communication device of the entry of the table and if the retrieved current version of firmware matches a current version of firmware of said entry of the table, by using strings comparison.

In an embodiment, strings comparison is based on regular expression.

In another implementation there is provided a method implemented in an apparatus for updating firmware of communication devices managed by a control device in an industrial system, the method comprising:
storing a table listing, at each entry of the table, at least an identifier of a communication device, an expected version of firmware of the communication device, a current version of firmware of the communication device,
retrieving an identifier of the communication device and a current version of firmware of said communication device,
scanning incrementally the entries of the table,
if the retrieved identifier of the communication device matches an identifier of the communication device of the entry of the table and if the retrieved current version of firmware matches a current version of firmware of said entry of the table, retrieving a firmware package associated with the expected version of firmware corresponding to said current version of firmware of the entry of the table.

In another implementation there is provided a computer-readable medium having embodied thereon a computer program for executing a method for managing firmware update of a set of communication modules. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 shows a schematic block diagram of a communication system according to one embodiment of the invention for managing firmware update of a set of communication modules; and
FIG. 2 shows a flow chart illustrating a method for managing firmware update of a set of communication modules according to one embodiment of the invention; and
FIG. 3a, 3b, 3c show examples of an update procedure table.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In one embodiment, a standalone I/O cluster is connected to a control device CT like a programmable logic controller PLC with a fieldbus like Ethernet/IP and contains a head driving clusters of I/O modules respectively through controllers. A cluster is a set of I/O modules physically linked together through a backplane and an I/O module is a usual automation module converting electrical signals to digital values. In a cluster, the cluster manager and different modules can communicate by means of their respective switches through a multipoint communication line.

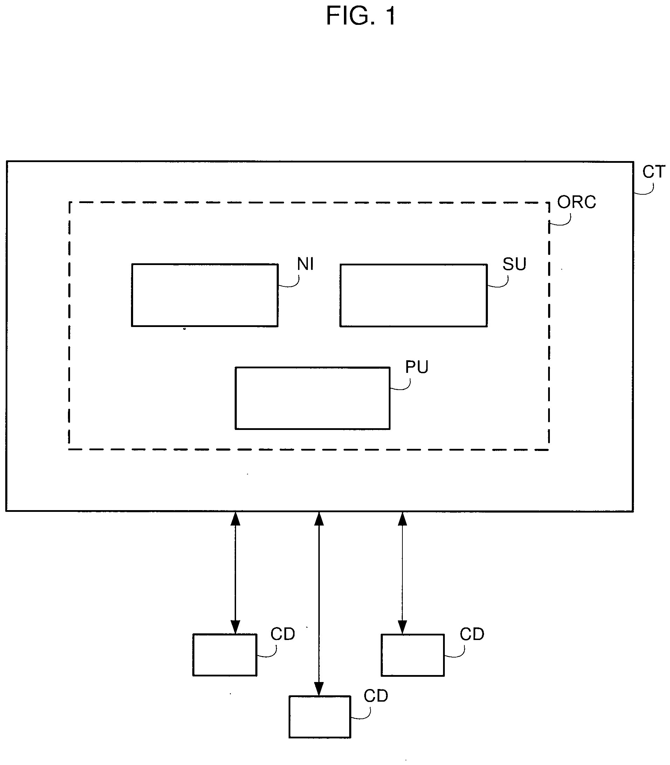

Referring to FIG. 1, an industrial communication system comprises a control device CT and a set of communication devices CD.

The control device CT can be a Programmable Logic Controller PLC, a Programmable Automation Controller PAC, or other type of processing device, which may include virtual devices like a Virtual Machine or Containers. In one embodiment, the controller CT is linked directly to such a Programmable Logic Controller PLC.

The control device CT is able to manage communication with a set of communication devices CD, like I/O modules IOM, via a multipoint communication line, and optionally with another control device via Ethernet and CAN (Controller Area Network) bus. For example, the controller is driven by a head that can drive other control devices. In one embodiment, the controller is included in the head.

A communication device CD can include Analog to Digital Converter (ADC) and Digital to Analog Converter (DAC) for connecting to sensors and the real world, communications modules, digital inputs and outputs, relays, and more. A communication device may also be a gateway or a servo drive. A communication device communicates with the control device CT through a communication line with adapted packet formats. In one embodiment, the communication devices CD are made up of a set of interconnected devices performing together an automation function.

In one embodiment, the control device CT implements an orchestrator module ORC that is able to update itself and to update communication devices with a firmware update package (in a client mode or in a server mode). The orchestrator module ORC is able to know the firmware version of itself and of communication devices, and the firmware update package to use for each communication device. In one embodiment, the orchestrator module ORC has the ability to rebuild the firmware version from the type of communication device with the link between the type of communication device and the name of the firmware update package. In one embodiment, the orchestrator module ORC has the keys to read the content of a firmware update package or ask the corresponding communication device to read it for itself.

The orchestrator module ORC comprises a network interface NI configured to communicate with a telecommunication network linking the control device and the communication devices. The network interface NI is further configured to retrieve an identifier of the communication device CD and a current version of firmware of said communication device CD, and optionally a current version of hardware of said communication device CD.

The orchestrator module ORC comprises a storage unit SU configured to store an update procedure table listing, at each entry of the update procedure table, at least an identifier of the communication device CD, an expected version of firmware of the communication device CD, a current version of firmware of the communication device.

The storage unit SU configured to further store a firmware collection containing firmware packages respectively associated with expected versions. In one embodiment, a firmware package contains one or more firmware and metadata relating for example to compatibility rules, cybersecurity, and installation rules.

The update procedure table can list also, for each entry, an address of a communication device CD and/or a type of the communication device CD. In one embodiment, the identifier of the communication device can contain the address of a communication device CD and/or a type of the communication device. For example, the address of a communication device CD is an IP address. The use of an address allows to update communication devices CD having different locations in a cluster with different firmware versions.

The update procedure table can list also, for each entry, a current version of hardware of the communication device.

The order of the entries of the update procedure table defines an update strategy allowing to automatically reach a targeted version of firmware for a communication device.

The orchestrator module ORC comprises a processing unit PU configured to scan incrementally the entries of the update procedure table.

For each entry, the processing unit PU is configured to compare the retrieved current version of firmware of said communication device CD with the current version of firmware of the entry of the update procedure table.

If there is no match between the retrieved current version and the current version of the update procedure table, the processing unit PU goes to the next entry for further comparison.

if the retrieved current version matches a current version of firmware of the entry of the update procedure table, the processing unit PU is configured to get the expected version corresponding to said current version of firmware of the entry of the update procedure table, and to retrieve a firmware package associated with the expected version from the firmware collection.

The orchestrator module ORC can then proceed with the update process by updating the firmware of the communication device with the retrieved firmware package.

For example, the orchestrator module ORC may identify the communication device to update by means of the identifier of the communication device and may install and execute the retrieved firmware package on the communication device.

In one embodiment, when the orchestrator module ORC checks if firmware versions or identifiers match, it may use strings comparison based on algo like regular expression, e.g. in order to manage easily multicriteria constraints. Comparison algorithm allows to validate matching between firmware versions, even if there is not an exact matching between the compared data. It allows to manage several versions in one entry of the update procedure table.

An embodiment comprises an orchestrator ORC under the form of an apparatus comprising one or more processor(s) including the processing unit PU, network interface(s) including the network interface NI, the storage unit SU and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

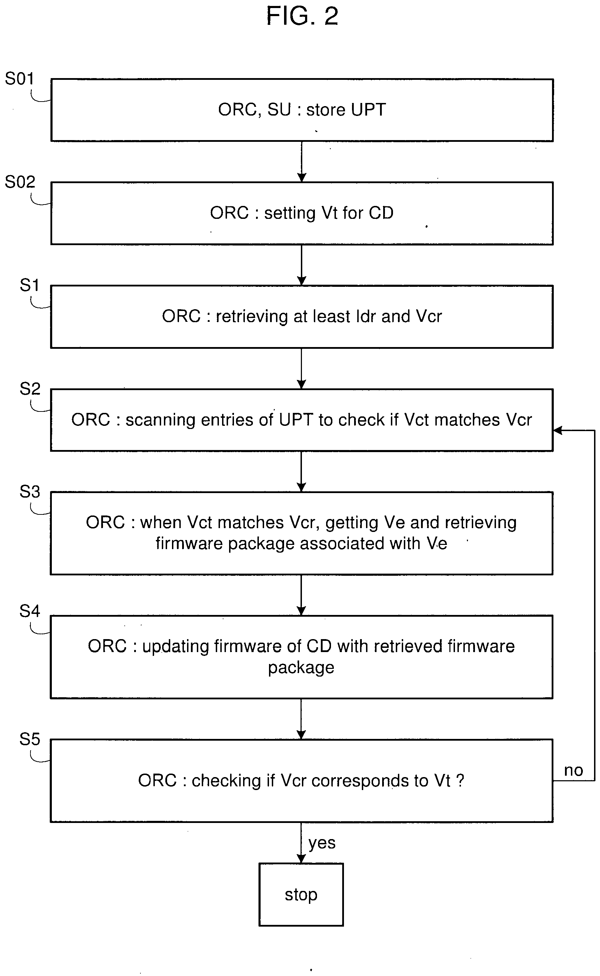

With reference to FIG. 2, a method for updating firmware of communication devices managed by a control device in an industrial system according to one embodiment of the invention comprises steps S 1 to S5.

The control device CT managing communication devices in an industrial system is linked to an orchestrator module ORC, that may be included in the control device or in any kind of database.

In initial step S01, a user, like a PLC application designer, may store, in the storage unit SU of the orchestrator module ORC, an update procedure table UPT listing, at each entry of the update procedure table, at least an identifier Idt of the communication device CD, an expected version Ve of firmware of the communication device CD and a current version Vct of firmware of the communication device.

Furthermore, the user can store in the storage unit SU a firmware collection containing firmware packages respectively associated with expected versions for communication devices.

In initial step S02, the orchestrator module ORC is set with a target version Vt of firmware for at least one communication device CD. In one embodiment, the target version Vt of firmware corresponds to one expected version Ve of firmware of the communication device CD of the update procedure table UPT.

In step S 1, the orchestrator module ORC interrogates communication devices managed by the control device CT to retrieve, for each interrogated communication device, information about said communication device and about the currently installed firmware of said communication device. Information about said communication device comprises at least an identifier Idr of the communication device and information about the currently installed firmware of said communication device comprises at least a current version Vcr of installed firmware of said communication device.

In one embodiment, the orchestrator module ORC is triggered to interrogate communication devices after different kind of events, like a reception of a full upgrade command, a plugging of a communication device, a reboot of the orchestrator, an update of the update procedure table UPT, or a reboot of a communication device after a firmware update for example.

Optionally, if the update procedure table UPT contains a current version of hardware Vhwt of communication device, the orchestrator module ORC retrieves also a current version Vhwr of hardware of communication device.

Retrieving information about said communication device and about the currently installed firmware of said communication device may be carried out in many ways, including for example, by requesting the information from a firmware package related to the communication device through an application programming interface (API) exposed to the orchestrator for such a purpose, by retrieving the information from a known storage location designated for such a purpose, or in other ways as will occur to readers of skill in the art.

In step S2, the orchestrator module ORC scans incrementally the entries of the update procedure table.

For each entry, the orchestrator module ORC checks if the retrieved identifier Idr of the communication device CD matches the identifier Idt of the communication device CD of the entry of the update procedure table, and checks if the retrieved current version Vcr of installed firmware of said communication device CD matches the current version Vct of firmware of the entry of the update procedure table.

Optionally, if the update procedure table UPT contains a current version Vhwt of hardware of communication device, the orchestrator ORC first checks if the retrieved current version Vhwr of hardware of said communication device CD matches the current version Vhwt of hardware of the entry of the update procedure table. Then orchestrator module ORC proceeds with the check relating to the retrieved current version Vcr of firmware of said communication device CD.

In step S3, if the retrieved current version Vcr of installed firmware of said communication device CD matches the current version Vet of firmware of the entry of the update procedure table, the orchestrator ORC gets the expected version Ve of firmware corresponding to said current version Vct of firmware of the entry of the update procedure table. The orchestrator can then retrieve a firmware package associated with the expected version Ve of firmware from the firmware collection. If the retrieved current version Vcr of installed firmware of said communication device CD does not match a current version Vct of firmware of any entry of the update procedure table, the method stops and said communication device CD is not updated. It means the installed firmware of said communication device CD was already updated to an expected version Ve corresponding to the target version Vt.

In step S4, the orchestrator module ORC updates the firmware of the communication device CD with the retrieved firmware package. Once the firmware of the communication device CD is updated, the communication device CD reboots.

In optional step S5, the orchestrator module ORC checks if the retrieved current version Vcr of firmware corresponds to the target version Vt of firmware for said communication device.

If the retrieved current version Vcr of installed firmware does not match the target version Vt of firmware for said communication device, steps S1 to S4 are repeated. The reboot of the communication device CD causes the orchestrator module ORC to continue the update strategy and starts again to interrogate the communication device CD as in step S 1.

If the retrieved current version Vcr of installed firmware matches the target version Vt of firmware for said communication device, update strategy is over for said communication device and the method stops.

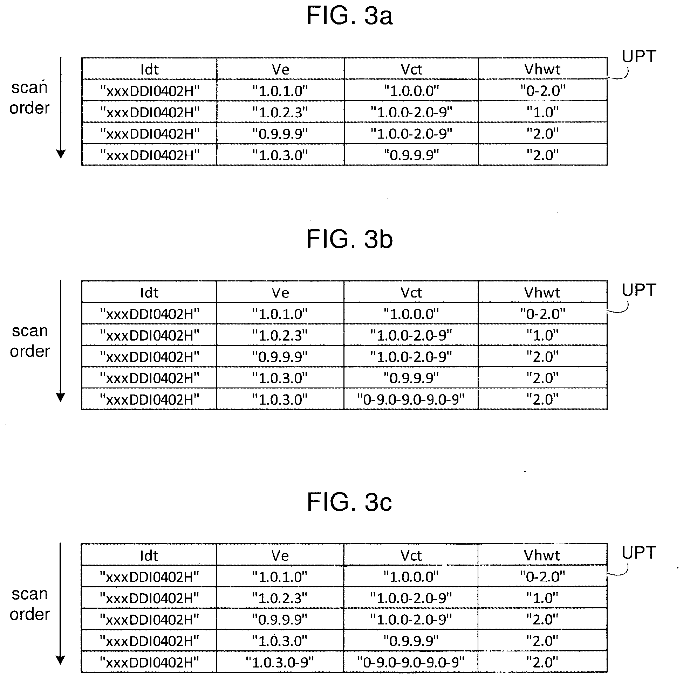

Referring to FIG. 3a; 3b and 3c, it is represented an example of an update procedure table UPT comprising the identifier Idt of communication device (here type of communication device), an expected version Ve of firmware of the communication device and a current version Vct of firmware of the communication device, and a current version Vhw of hardware of the communication device.

Referring to FIG. 3a, an update strategy can be to update communication device with a target firmware version "1.3.0.0". On old firmware version from 1.0.x.y (with x being 0 or 1 or 2, with y being from 0 to 9), there is a forced firmware version "0.9.9.9" (a mandatory step) before be able to upgrade the communication device with the target firmware version.

According to the scan order, if the current version Vhw of hardware of the communication device is "1.0" or "2.0" and the current version Vc of firmware of the communication device is "1.0.0.0", the orchestrator may use the expected version Ve of firmware "1.0.1.0 to ensure the firmware update will work. Then, if the current version Vhw of hardware of the communication device is "1.0" and the current version Vc of firmware of the communication device is in range "1.0.0.0" to "1.0.0-2.0-9", the orchestrator may use the expected version Ve of firmware "1.0.2.3" to ensure the firmware update will work. In this example, this is the last firmware version supported by the hardware version.

Referring to FIG. 3b, an update strategy can be to update communication device with a target firmware version "1.3.0.0", as in previous example of FIG. 3a. The update procedure table UPT contains a new last line. It allows to take into account a case, wherein if the current version Vc of firmware of the communication device is in the range "0-9. 0-9. 0-9. 0-9", i.e. the current version Vc of firmware is any state different from the previously listed - including is newer than the expected one ("1.0.3.0")-, a downgrade of the firmware version is forced to the expected firmware version.

Referring to FIG. 3c, an update strategy can be to update communication device with a target firmware version "1.3.0.0", as in previous example of FIG. 3a. The update procedure table UPT contains a new last line different from example of FIG. 3b. It can allow as before a downgrade of the firmware version is forced to the expected firmware version. Moreover, it allows to discriminate a firmware package to be used from the firmware collection, by parsing the list of packages in a top-down order and selecting the first firmware package matching the criteria of the expected version Ve of firmware "1.0.3.0-9". For example, if the firmware collection contains only firmware packages corresponding to the expected versions Ve of firmware "1.0.1.0", "1.0.2.3", "0.9.9.9", "1.0.3.1" and "1.0.3.0", the orchestrator will select firmware package corresponding to the expected versions Ve of firmware "1.0.3.1".

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments.

## Claims

1. An apparatus (ORC) for updating firmware of communication devices (CD) managed by a control device (CT) in an industrial system, the apparatus comprising:
one or more network interfaces to communicate with a telecommunication network;
a processor coupled to the network interfaces and configured to execute one or more processes; and
a memory configured to store a process executable by the processor, the process when executed operable to:
store a table listing, at each entry of the table, at least an identifier (Idt) of a communication device (CD), an expected version (Ve) of firmware of the communication device (CD), a current version (Vct) of firmware of the communication device (CD),
retrieve (S1) an identifier (Idr) of the communication device (CD) and a current version (Vcr) of firmware of said communication device (CD),
scan (S2) incrementally the entries of the table,
if the retrieved identifier (Idr) of the communication device (CD) matches an identifier (Idt) of the communication device (CD) of the entry of the table and if the retrieved current version (Vcr) of firmware matches a current version (Vct) of firmware of said entry of the table, retrieve (S3) a firmware package associated with the expected version (Ve) of firmware corresponding to said current version (Vct) of firmware of the entry of the table.

2. An apparatus (ORC) according to claim 1, wherein the apparatus (ORC) is set with a target version (Vt) of firmware for one or several communication devices, and steps of retrieving (S 1) an identifier, scanning (S2) and retrieving (S3) a firmware package are repeated until the expected version (Ve) of firmware matches the target version (Vt) of firmware.

3. An apparatus (ORC) according to any of previous claims, wherein the identifier of the communication device (CD) comprises at least one of an address of the communication device (CD) and a type of the communication device (CD).

4. An apparatus (ORC) according to any of previous claims, wherein the apparatus is further configured to store, at each entry of the table, a current version of hardware (Vhwt) of communication device, to retrieve a current version (Vhwr) of hardware of communication device (CD) and to retrieve the firmware package associated with the expected version (Ve) of firmware corresponding to said current version (Vct) of firmware of the entry of the table if the retrieved current version (Vhwr) of hardware of said communication device (CD) matches the current version (Vhwt) of hardware of the entry of the table.

5. An apparatus (ORC) according to any of previous claims, wherein the apparatus is further configured to update the firmware of the communication device (CD) with the retrieved firmware package, causing the reboot of the communication device (CD) and the repetition of steps of retrieving (S 1) an identifier, scanning (S2) and retrieving (S3) a firmware package.

6. An apparatus (ORC) according to any of previous claims, wherein the order of the entries of the table defines an update strategy allowing to automatically reach a targeted version (Vt) of firmware for a communication device (CD).

7. An apparatus (ORC) according to any of previous claims, wherein the apparatus checks if the retrieved identifier (Idr) of the communication device (CD) matches an identifier (Idt) of the communication device (CD) of the entry of the table and if the retrieved current version (Vcr) of firmware matches a current version (Vct) of firmware of said entry of the table, by using strings comparison.

8. An apparatus (ORC) according to claim 7, wherein strings comparison is based on regular expression.

9. A method implemented in an apparatus (ORC) for updating firmware of communication devices (CD) managed by a control device (CT) in an industrial system, the method comprising:
storing a table listing, at each entry of the table, at least an identifier (Idt) of a communication device (CD), an expected version (Ve) of firmware of the communication device (CD), a current version (Vct) of firmware of the communication device (CD),
retrieving (S 1) an identifier (Idr) of the communication device (CD) and a current version (Vcr) of firmware of said communication device (CD),
scanning (S2) incrementally the entries of the table,
if the retrieved identifier (Idr) of the communication device (CD) matches an identifier (Idt) of the communication device (CD) of the entry of the table and if the retrieved current version (Vcr) of firmware matches a current version (Vct) of firmware of said entry of the table, retrieving (S3) a firmware package associated with the expected version (Ve) of firmware corresponding to said current version (Vct) of firmware of the entry of the table.

10. A computer-readable medium having embodied thereon a computer program for executing a method for updating firmware of communication devices (CD) managed by a control device (CT) in an industrial system according to any of claims 1 to 9.
